# EUROPEAN PATENT APPLICATION

(11) **EP 2 481 280 A1**
(43) Date of publication of application: **01.08.2012**
(21) Application number: 10818443.3
(22) Date of filing: 23.09.2010
(51) Int. Cl.: A01G 31/02, C02F 3/32

(54) **SYSTEM AND DEVICES FOR ASSISTING IN PLANTING AND GROWING FLOATING MACROPHYTE-TYPE PLANT SPECIES IN USES FOR THE PURIFICATION OF WATER**

(30) Priority: 23.09.2009 ES 200930721
(71) Applicant: Macrofitas, S.L., 28224 Madrid (ES)
(72) Inventor: RIESCO PRIETO, Pablo, E-28224 Pozuelo de Alarcón, Madrid (ES); TORRES JUNCO, Vicente, E-28794 Guadalix de la Sierra - Madrid (ES)
(74) Representative: Naranjo Marcos, Maria Antonia
(86) International application number: PCT/ES2010/000391
(87) International publication number: WO 2011/036317

(57) **Abstract**

System and devices for assisting in planting a growing floating macrophyte-type plant Species in uses for the purification of water

The invention relates to a system a devices for assisting in planting and growing floating macrophyte-type plant species in uses for the purification of water , comprising the use of three devices preferably formed from low-density plastic materials ; a plane polygonal floating structure with elements for connecting the other floating structures, provided with at least one inner coupling bar connected to the contour of the floating structure or to another inner bar by means of a flexible arc ; a plane crossed-linked structure with element for anchoring to the floating structure and at least one central circular housing; and a basket or cone consisting of a flexible plastic material and containing a copy of a macrophyte plant a root cutting or rhizome with a troncoconical form.

## Description

### Objective of the invention;

The objective of this invention refers to a system and devices to assist in the planting and growth of floating macrophyte plant species in water purification and which is circumscribed to the technical sector of floating macrophyte plant species planting and cultivation, with various uses, but predominately associated with water purification processes and developed as an additional complement to invention patent No P 200502496 "Support for securing floating plant species cultivations in the same name and others of the same name (reference to national patent number and PCT/ES 2009/000246 Assembler floating structure).

**State of the art;** Parent report P 200502496 makes a brief review of existing known hydroponic cultivation systems (floating, without soil) analysing the problems, drawbacks and difficulties involved in each one.

Systems are known in the state of the art, such as those described in patent 200900811, which includes a waste water and contaminant spills purification procedure based on cultivation of emergent macrophyte crops converted into floating. However, this system does not incorporate any of the devices described here, but instead the species are cultivated on a mesh and biodegradable container, together with a sand and gravel-based additional ballast to maintain it in a semi-submerged position.

This system does not involve any advantages or new features worthy of consideration.

The use of plants in waste water purification because of their capability to facilitate oxygen exchange and absorb waste, particles and other water components through their roots is known in the state of the art, the incorporation of floating plants of the surfaces of pools or ponds is a natural purification method that is simple, efficient and economic. However, on occasions, the entire planting, growth and maintenance process of these plant species involves technical problems to be resolved that could lead to system collapse due to, for example, the purification filters that silt up due to waste accumulation or situations in which the plants die or deteriorate because of location, lack of reinforcement in the initial growth and adaptation stage to the point at which the purification system is directly affected.

There have been various types of support used in macrophyte plant cultivation. Moreover, in addition, the most widely employed independent support elements up to now are based on floating polyethylene tubing to which the plants are attached by wires to their root balls.

There is also the option to linearly join this polyethylene tubing to rubber tubing by staples at regular distances so that the plants are held in place by pressure between the two types of tubing. However, these options are not optimum and, in the first case, the plants rotate around the tubing they are attached to as they grow, until the leaves are finally submerged in the water and the roots are in the air so that most of the plants die. In the second case, the plants die by strangulation caused by the pressure exerted between the two tubing types.

Another option is to use a metal mesh in top of the floating tubing. The plant roots attach themselves to the mesh while the lower leaves are pierced by a rod that keeps them in place on the mesh. This system causes physical damage to the plants with serious consequences, including death.

Compared to existing systems, the objective of this invention is to propose a system for installation in pools and zones for waste water purification, which consists of a series of components to facilitate planting, and growth of helophyte plants (macrophytes), predominantly of the bulrush, spardenia or *Typha latifolia* and/or other adequate types, with a series of support devices or parts that make up a factor that guarantees survival and correct development and growth of the floating plant species that carry out the purification process, thus avoiding many of the problems, which, in practice, lead to the failure of these systems due to plant death.

The system integrates the combined use of three devices, preferably of low-density plastic materials that reduce and facilitate floating and comprise the following main components;
- **floating assembler structure**: this is an independent floating assembler support structure that allows the securing of non-independent structure or container used for water surface plant cultivation and which is also configured so that it can be assembled with other similar structures; it is a flat floating polygon structure that includes at least two hooks, one male and one female that permits the joining together of the floating structures and which, in turn, presents a series of bars inside that accept the coupling of non-independent supports that hold the plants.

Assembling these structures together by their joining elements producers a network of floating assembler structures that covers the desired water surface in function of the number assembled structures. Since the joining elements may be located on vertices or sides, the structures can be joined together by their sides or simultaneously by sides and vertices. The structure may incorporate coupling bars joined by their ends to the floating structure edge and/or to the interior bars. Non-independent supports for seeds, plants and/or combination of the two can be coupled to these bars. The number and positions of the coupling bars may be varied depending on the number and positions of the supports to be fitted on them.

Optionally, the coupling bars may be joined together or to the structure edge by means of flexible arcs that provide certain mobility to the bars in order to adapt to the size and number of supports fitted on them.

Optionally, the floating assembler structure may contain two parallel coupling bars, connected at the ends to the structure edge. The separation of these parallel bars divides the structure into two parts that can be used to fill-in cavities at the mesh or macrostructure edges on the water surface. The bars may be cylindrical or in the form of an inverted "C", thus achieving savings in material.
- **flat gridded structure;** these are similarly made of plastic material comprising a plurality of girds having different shapes and sizes that have a central housing for the basket part or cone containing the helophyte plant, seed or part of the same (cutting or rhizome) and four anchor elements in the form of a "C" located two-by-two at the structure vertices for supporting the floating assembler structure. The anchor elements are configured to compensate the moments and forces generated by the portion of the plant that emerges above the water level with respect to the intersection point of said portion with the plane defined by the structure. The anchor elements have protrusions that join and fit into the internal tubular structure that configures the floating assembler structure part so that two of the anchors approach said part and the other two separate it with respect to the flat gridded structure. In the case of joining anchors, the apertures are arranged in the lower section in order to act as a hook and the anchors that separate the clamps are arranged in the central section. The flat structure form shall not be limiting and may adopt any known geometric shape, although in a preferred embodiment example, this part is square.
- **Basket or cone;** this is a truncated cone part made of low-density flexible plastic, approximately 6.5 cm long, which can be of different sizes without leaving the objective claimed in this invention. This part has a diminishing proportional diameter between the upper or mouth and lower section or base, with the latter being closed along its full internal perimeter by a cover of the same material.

The upper section or mouth comprises a closed ring, the upper ring has two lateral columns that are parallel to both laterals that delimit the decreasing diameter development of the part these two columns are interrupted by other interleaved, smaller-diameter rings located at equal distances from each other, these rings are not completely closed, but instead, present cuts or sections located parallel in the ring part opposite the that occupied by the lateral columns. The total part length permits the succession of several ring units that are fragmented in proportional decreasing diameters until the base or lower end-stop of the part is reached, which is closed along its internal perimeter by a cover and which, in other embodiments of completely different sizes can house a higher or lower number of rings in function of the development of the total part body length.

The diameter or size of the upper ring located in the mouth of the part shall be proportional to that of the central housing aperture arranged on the flat gridded structure so that when the part is fitted via the orifice in the central housing, the upper ring or mouth is level with the surface, with the rest of the part passing through said housing because of the deformation and bending capacity provided by the cuts made in the successive rings along the length of the body so that they allow the insertion of the part along its entire length by pressure, until the full upper ring is reached that is located above the centre support housing of the flat gridded structure.

The basket or cone is a support and reinforcement element that houses the seed, plant or cutting of the plant species that is to be gown in the aquatic medium so that, during its initial growth and development stage and the initial plant growth stages, this flexible plastic truncated cone body performs the function of securing and supporting the seed or plant and its roots or rhizome with respect to the base of floating structure, its presence prevents the seeds from moving or becoming lost inside the support, they similarly perform a support function during the plant development and growth stage, the completely open and even discontinuous arrangement of the part body lateral rings allow and facilitate root and rhizome growth and extension to the outside in search of water and light required so that the plant does not alter its balanced position on the structure during the growth process, thus allowing its floatation and preventing the plant from tipping over due to excessive root growth during subsequent development stages.

### Drawing descriptions:

The accompanying sheets of drawings help better understanding of the invention and are expressly related to an exemplary embodiment of said invention. These drawings are for non-limiting guideline purposes only.

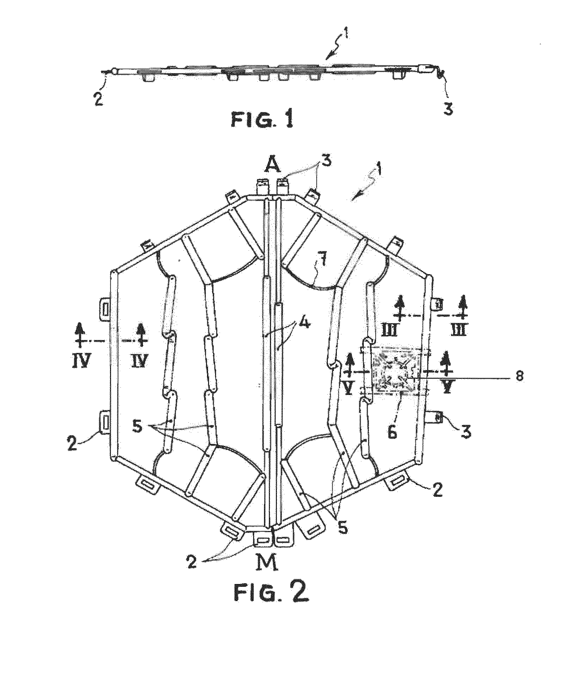

Figure 1.- Represents a profile view of the floating assembler structure covered by this invention.
Figure 2.- This is a plan view of the floating assembler structure of Figure 1 showing a square gridded structure joined to the same.

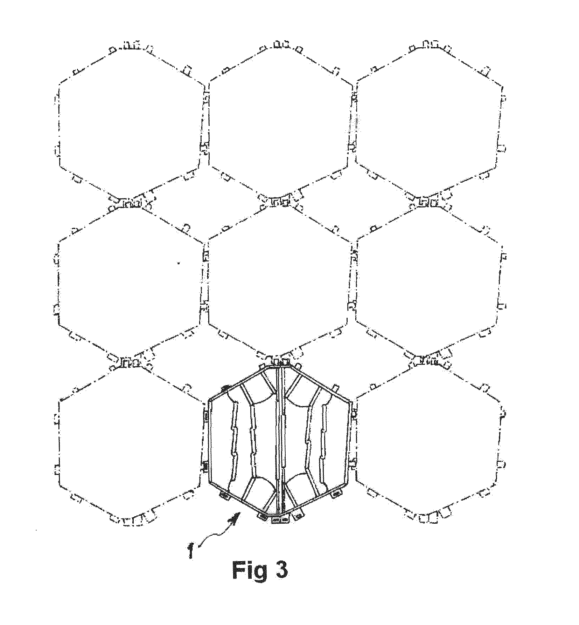

Figure 3.- This is a plan view of one way of assembling the floating assembler structure of figure 2.

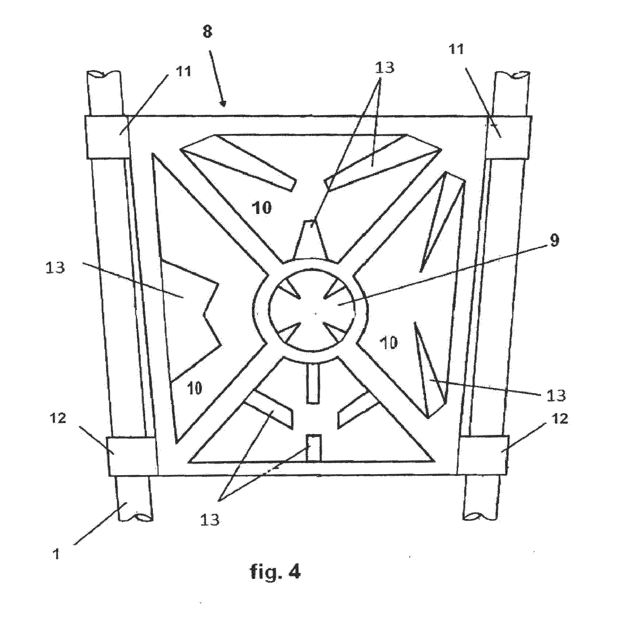

Figure 4.- This shows a plan view of the flat gridded structure for securing the floating plant species as covered by this invention.

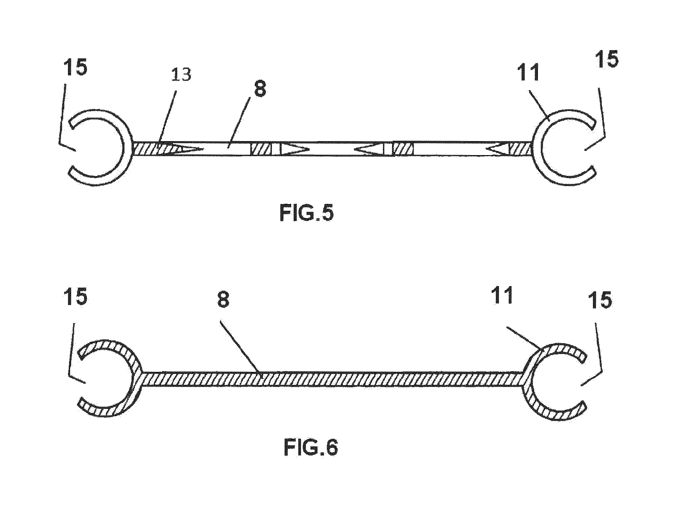

Figure 5.- This is a section view of the flat gridded structure according to section I-I.
Figure 6.- This is a section view of the flat gridded structure according to section II-II.

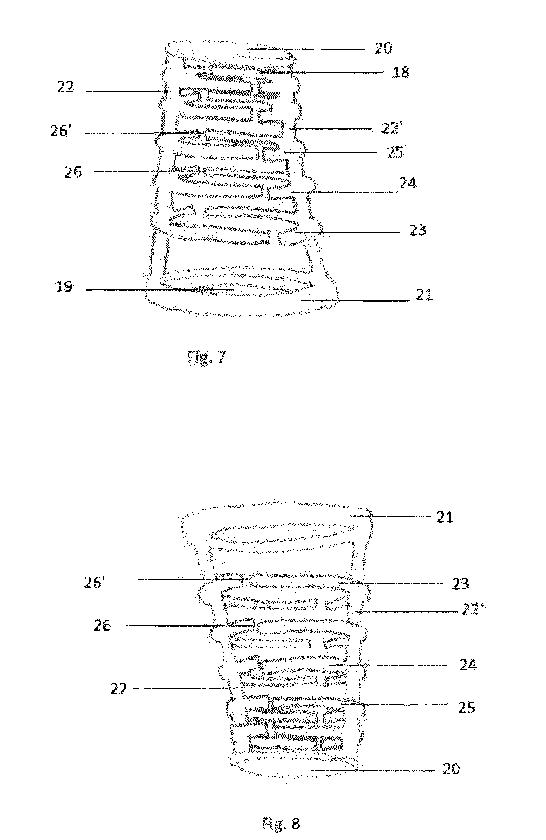

Figure 7.- This shows a lateral view of the basket or cone part.
Figure 8.- This is a lateral view of the basket or cone part in the vertical position, showing the closed upper ring, the lateral columns, the successively lower diameters and the cover of lower opaque base.

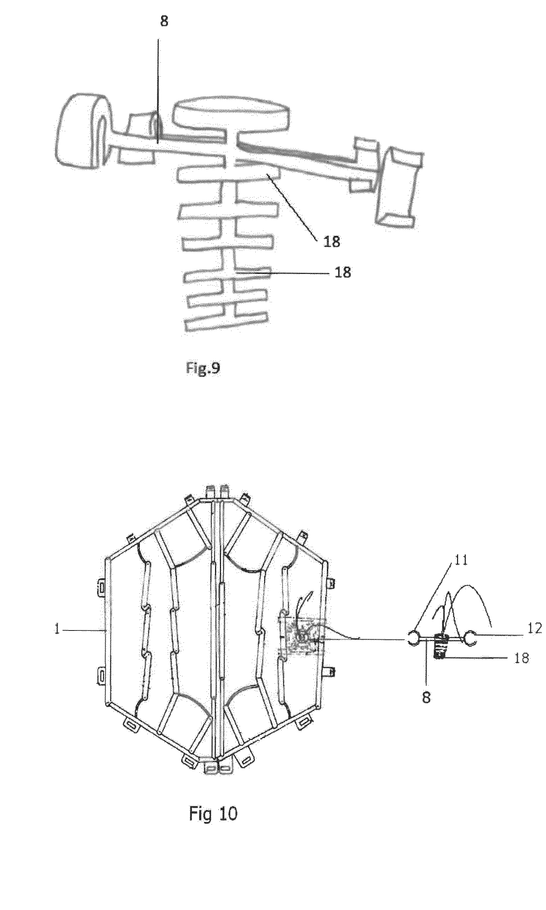

Figure 9.- This shows the basket or cone part in the central housing of the flat gridded structure making up the assembly between the flotation element and the plant or seed support which, in turn, is joined to the floating assembler structure.
Figure 10.- This represents the three parts or devices: floating assembler structure, flat gridded structure and basket or cone, with a macrophyte plant housed inside in its normal use or application in a waste water purification system.

### Description an exemplary embodiment of the invention

In accordance with an exemplary embodiment of the system and devices to help in planting and growth of floating macrophyte plant species used for water purification and which is made up of three parts or components;
- **floating assembler structure** (1) in the form of irregular hexagonal polygon, which has two connecting elements (hooks) on each side. Three consecutive sides have female connections (2), while the three remaining sides have male connections (3).

The structure similarly has two female connections on one of the vertices (M) and two male connections on the opposite vertex (A). The structure may be cut with scissors or other cutting tool along the line that divides these two (A) vertex connections and those of the (M) vertex, thus producing two semi-structures. The floating assembler the objective of this exemplary embodiment, has two coupling bars that may be parallel or not, and central (4) that go from vertex (A) to vertex (B) with adequate separation between them so that is possible to divide the hexagonal structure into two halves along the AM axis using scissors or other cutting tool in order to use each half in the filling-in of the cavities at the edges of the mesh. The floating assembler structure presents a plurality of coupling bars (5) inside. Said bars are joined at their ends to the polygonal structure and, together with the bars forming the structure, the flat gridded structure coupling and present flexible arcs (7) the join the coupling bars together or along the structure edge so that the coupling bars (5) can vary their distances and adapt.
- **flat gridded structure**; This consists af a flat structure (8) formed by a plurality of grids that include several central housings (9, 10) that are configured to hold at least one seed, plant or part of same. The structure has a plurality of anchors (11-12). In a preferred embodiment, there are four anchor elements although they can vary according to part geometry, but there must be at least two. The anchor elements are located at the flat structure vertices in the form of semicircular clamps having an aperture oar mouth (15) for securing to the floating assembler structure.

The central housing of the flat structure has a plurality of mechanical fixing elements (13) arranged discontinuously along the inside edge of the central housing and the rest of the housings delimited in the interior edge of the floating assembler structure.

In an alternative embodiment of the invention that is not shown in the drawings, the anchor elements vary, being of two types, the second being longer than the first, with elbowed ends, all leaving from the inner face of the structure.

In the case of the protrusions that tend to approach the floating assembler structure the first are located in a more internal position than the second, with the elbows on the latter type being towards the inside acting as approach hooks. In the protrusions that tend to separate the floating assembler structure, the first protrusions are in a more external position than the seconds, with the elbows on the latter type being towards the outside and performing a retention function.

The flat gridded structure has a central housing (9), preferably circular and the other housings (10) are limited by the exterior edge of the central housing.

The plant, root or rhizome held in the basket of cone consisting of truncate cone (18), preferably made of flexible plastic, with a progressively diminishing diameter from the upper part or mouth (19) to the lower part or base (20) is placed in the central housing; The upper part or mouth comprises a closed ring (21), two parallel lateral columns (22 and 22') leave the upper ring and run along the full length of the part until they connect with the part base. The two lateral columns are interrupted by other, smaller diameter interleaved rings (23, 24, 25) that are located at equal distances from each other, these rings are not fully closed, but instead, present cuts or sections (26 and 26') that are located in parallel in the ring part opposite that occupied by the lateral columns. The total part length allows the succession of several fragmented ring units having proportionally diminishing diameters until the base or final lower end-stop is reached, which is shown closed by a cover of the same plastic material.

## Claims

1. System and devices to assist in the planting and growth of floating macrophyte plant species in water purification **characterised in that** they comprise three parts or components integrated together; the floating assembler structure, flat gridded structure and basket or cone; the floating assembler structure has an irregular hexagonal polygonal shape, with each side fitted with two joining elements. There are three consecutive sides with female connections and another three with male connections. At one of its vertices (M), the structure has two female connections and two male connections at the opposite vertex (A) and is also fitted with two interior and central coupling bars that extend to the A - M vertex, thus allowing the division of the hexagonal structure into two halves. The assembler structures present a plurality of coupling bars joined to the polygonal structure and also present flexible arcs that join the coupling bars together or with the floating structure edge.

2. System and devices to assist in the planting and growth of floating macrophyte plant species in water purification, in accordance with the claim 1 and **characterised in that** the floating assembler structure houses and secures a variable number of flat gridded structures to its surface, which have at least one circular central housing and for anchor elements that join it to the floating assembler structure. Said anchor elements shall be in the form of a clarnp with an aperture or mouth located in a different place according to the function to perform;
- Separation anchors have apertures in their central parts.
- Joining anchors have their apertures in the lower sections.
In turn, the central housing has a plurality of mechanical securing elements arranged in a discontinuous manner along the inside edge of the central housing and the other housings are delimited on the inside edge of the floating assembler structure.

3. System and devices to assist in the planting and growth of floating macrophyte plant species in water purification, in accordance with the previous claims and **characterised in that** the central circular housing of the flat gridded structure is to house a basket or cone that comprises a truncated cone having a proportional diminishing diameter between the upper part or mouth and the lower part or base, the latter is closed along its inside perimeter by a cover. The upper part or mouth comprises a closed ring with two parallel lateral columns located on either side, these two lateral columns are interrupted by other smaller diameter interleaved rings, located at equal distances from each other, these rings are not completely closed, but instead present cuts or sections located parallel in the opposite ring part that is occupied by the lateral columns.
